# EUROPEAN PATENT APPLICATION

(11) **EP 4 678 334 A1**
(43) Date of publication of application: **14.01.2026**
(21) Application number: 24187522.8
(22) Date of filing: 09.07.2024
(51) Int. Cl.: B24B 13/005, G02C 7/02

(54) **METHOD FOR BLOCKING A SPECTACLE LENS BLANK**

(71) Applicant: Carl Zeiss Vision International GmbH, 73430 Aalen (DE)
(72) Inventor: LAUNAY, Florian, 73430 Aalen (DE); WIEDEMANN, Dominik, 73430 Aalen (DE); YADWAD, Harshavardhan, 73430 Aalen (DE); SCHOEFER, Waltraud, 73430 Aalen (DE)
(74) Representative: Tautz & Schuhmacher

(57) **Abstract**

Provided is a method for blocking a spectacle lens blank, comprising identifying at least a position of a center point of the spectacle lens blank, and applying an optical mark to the spectacle lens blank indicating at least the position of the center point of the spectacle lens blank. The method is characterized in that it further comprises arranging the spectacle lens blank in a decentered manner at the blocking piece, at least such that the position of the center point indicated by the applied optical mark is located in a predefined relative position with respect to the blocking piece, and blocking the spectacle lens blank to the blocking piece in the decentered arrangement.

## Description

Provided is a method for blocking a spectacle lens blank, a method for manufacturing a spectacle lens, spectacle lens, and a semi-finished spectacle lens blank. The disclosure is, thus, related to manufacturing spectacle lenses and semi-finished or finished spectacle lens blanks.

Mechanically altering the front surface or back surface of a spectacle lens blank typically involves blocking the spectacle lens blank to a blocking piece to mechanically fixate the spectacle lens blank during the mechanical treatment. In many cases, the spectacle lens blank is blocked in a centered manner with respect to the blocking piece. However, in some cases, a decentered blocking may be required for mechanically altering a surface of the spectacle lens blank. Decentered blocking means that the center of the blocked spectacle lens blank does not coincide with the center of the blocking piece. Particularly in cases, in which the blocking piece has to be blocked multiple times between different steps in the manufacturing process a consistent arrangement and orientation of the spectacle lens blank at the blocking piece may be challenging.

In a different aspect, spectacle lenses are often provided with permanent markings and/or non-permanent markings at the end of the production process. Such markings shall allow the identification of specific points or regions at the spectacle lens which may be of interest when adapting the spectacle lens to a spectacle frame. Such markings may for instance indicate the location of the near reference point and the distance reference point. Such markings are provided for the optician to facilitate adjusting the spectacles lenses to the spectacle frame and the spectacles to the wearer. After completing the adjustments, the optician typically removes such markings. It is emphasized that such markings are merely applied for the benefit of the optician but such markings are not used during the manufacturing process for manufacturing a spectacle lens or a semi-finished spectacle lens or a finished spectacle lens from a lens blank.

DE102007063866B3 describes a spectacle lens having markings to indicate various points of interest at the spectacle lens.

US D649,991 S describes a lens blank having a surface pattern applied thereto.

US 2015 0277 143 A1 describes a method for printing an ink jet marking on a surface.

US 2008 0273 073 A1 describes a system and a method for an application of ink formulations onto ophthalmic lenses.

It is, thus, desirable to provide methods and devices for blocking lens blanks not exhibiting the disadvantages of the conventional devices and methods.

This problem is solved by methods having the features of the respective independent claims. Optional features and embodiment are described in the dependent claims and in the description.

Provided is a method for blocking a spectacle lens blank. The method comprises identifying at least a position of a center point of the spectacle lens blank and applying an optical mark to the spectacle lens blank indicating at least the position of the center point of the spectacle lens blank. The method is characterized in that it further comprises arranging the spectacle lens blank in a decentered manner at the blocking piece, such that at least the position of the center point indicated by the applied optical mark is located at a predefined relative position with respect to the blocking piece, and blocking the spectacle lens blank to the blocking piece in the decentered arrangement.

A spectacle lens blank or lens blank may relate to an unprocessed precursor of a spectacle lens, such as a lens blank having an unprocessed front surface and an unprocessed back surface. The lens blank may be provided in a molding process. The lens blank may, however, also relate to a partly processed precursor of a spectacle lens. For instance, the lens blank may have a front surface which is partly or fully processed, and which may be covered with a protective foil or coating. As generally understood and defined in section 3.8.1 of ISO 13666:2019 (E), a lens blank may be a piece of optical material with one optically finished surface for the making of a lens. The terms lens blank and spectacle lens blank may be used as synonyms.

As generally understood and defined in section 3.5.2 of ISO 13666:2019 (E), a spectacle lens may be an ophthalmic lens according to section 3.5.1 of ISO 13666:2019 (E) worn in front of, but not in contact with, the eyeball.

A blocking piece relates to an adapter piece for mounting a lens blank into a processing device, in particular a processing device for machining and/or grinding and/or cutting and/or polishing the back surface of the lens blank according to prescription data and/or for edging the spectacle lens according to provided edging data. On one side, the blocking piece is adapted to contact a lens blank and, on another side, the blocking piece is adapted to engage in a processing device for processing the lens blank. The blocking piece is adapted to allow reversible blocking of a lens blank, wherein the blocked lens blank may be unblocked in a manner maintaining the integrity of the lens blank and in particular of the front surface of the lens blank, which may optionally be protected by a protective foil or coating.

A semi-finished spectacle lens is a piece of optical material, such as a spectacle lens blank, with one optically finished surface for the making of a lens, as generally understood and defined in section 3.8.1 of ISO 13666:2019 (E). The terms semi-finished spectacle lens, semi-finished lens, semi-finished lens blank, and semi-finished blank may be used as synonyms.

As generally understood and defined in section 3.2.6 of ISO 13666:2019 (E), the geometrical center of a spectacle lens blank is defined by the intersection of the horizontal centerline and the vertical centerline of the rectangular box that circumscribes the shape of the spectacle lens blank or uncut spectacle lens.

As generally understood and defined in section 3.2.3 of ISO 13666:2019 (E), the horizontal centerline is a horizontal straight line located at an equal distance from the two horizontal tangents of the boxed lens system according to section 3.2.1 of ISO 13666:2019 (E).

As generally understood and defined in section 3.2.3 of ISO 13666:2019 (E), the vertical centerline is a vertical straight line located at an equal distance from the vertical sides of the rectangular box that circumscribes the shape of the spectacle lens blank.

Blocking may mean mounting a spectacle lens blank into a processing device, in particular a processing device for machining and/or grinding and/or cutting and/or polishing the back surface of the lens blank according to prescription data and/or for edging the spectacle lens according to provided edging data.

Mechanically altering a surface of a spectacle lens blank may mean machining and/or grinding and/or cutting and/or polishing the surface of the spectacle lens blank using a processing device.

As generally understood and defined in section 3.2.13 of ISO 13666:2019 (E), the front surface of a spectacle lens or spectacle lens blank is the surface of the lens or lens blank intended to be fitted away from the eye.

As generally understood and defined in section 3.2.14 of ISO 13666:2019 (E), the back surface of a spectacle lens or spectacle lens blank is the surface of the lens or lens blank intended to be fitted nearer to the eye.

In general, an automated recognition of the optical mark and optionally extracting information about the orientation and/or position of the spectacle lens blank and/or the location of predefined points of interest may be carried out at least partly by using automated pattern recognition, which may be performed with or without the use of artificial intelligence.

The disclosure provides the advantage that a precise and/or reliable arrangement and/or orientation of a spectacle lens blank at a blocking piece can be achieved. In particular, the disclosure provides the advantage that defined and measurable relative positioning and orientation of the spectacle lens blank and the blocking piece may be achieved. Moreover, the disclosure allows carrying out multiple sequential blocking processes, for instance blocking the lens for different processing steps at its front surface and at its back surface, in a defined manner. This may particularly assist in arranging the spectacle lens blank at the blocking piece with a defined quantity and/or quality of decentration. Accordingly, the disclosure may allow achieving a more advanced mechanical alteration of the spectacle lens blank and/or a higher precision in the manufacturing process. Moreover, the disclosure may allow reducing deviations in the manufacturing process and, hence, reducing the amount of production reject. This may contribute to a better ecological compatibility of the manufacturing process and save some cash.

The optical mark may be applied in a decentered manner to the spectacle lens blank. Optionally, the arrangement and/or orientation of the optical mark relative to the spectacle lens blank may be individually adjustable. This may allow applying the optical mark to the spectacle lens blank in an individual manner to reflect the requirements of the manufacturing process for the individual spectacle lens.

The optical mark may have a predefined appearance. The predefined appearance of the optical mark may be chosen according to the purpose of the optical mark, which may depend on the type, number and location of one or more points of interest at the spectacle lens blank to be indicated by the optical mark. The predefined appearance may be used by machines during the manufacturing process to automatically recognize a position and/or and orientation of the spectacle lens and/or of predefined points of interest indicated by the optical mark.

Optionally, the optical mark may comprise a spot for indicating the center point of the spectacle lens. This may facilitate a recognition of the center point, optionally in an automated manner, based on the spot indicating the center point.

The optical mark may comprise one or more straight lines for indicating at least one of a horizontal centerline and a vertical center line of the spectacle lens blank. This may allow recognizing the horizontal centerline and/or the vertical center line in an automated manner. Furthermore, the spectacle lens blank may then be arranged in a decentered manner at the blocking piece such that at least one of the horizontal centerline and the vertical centerline are oriented in a predefined manner with respect to the blocking piece.

The center point of the spectacle lens blank may be the geometrical center of the spectacle lens blank. This may allow determining and/or setting a defined decentration of the spectacle lens blank with respect to the blocking piece.

The optical mark may comprise one or more straight lines for indicating at least one of a horizontal centerline and a vertical centerline of the spectacle lens blank. Furthermore, the spectacle lens blank may be arranged in a decentered manner at the blocking piece such that the at least one of the horizontal centerline and the vertical centerline are oriented in a predefined manner with respect to the blocking piece. This may facilitate adjusting the arrangement and/or orientation of the spectacle lens blank when blocking the spectacle lens blank in consecutive blocking steps at the front surface and the back surface of vice versa. This may facilitate ensuring a precise alignment of the two blocking processes when requiring a decentered blocking of the spectacle lens in a predefined manner. This may facilitate the manufacturing of front side progressive lenses requiring a mechanical alteration of the front surface and the back surface.

Alternatively, the center point may be a geometrical center of a ring-shaped diffraction structure of the spectacle lens blank. The optical mark may further indicate at least one of a horizontal centerline and a vertical centerline of the ring-shaped diffraction structure. This may allow indicating and determining the geometrical center of the ring-shaped diffraction structure of the spectacle lens blank and allow ensuring an alteration of the spectacle lens blank in concentrical manner with respect to the ring-shaped diffraction structure. Accordingly, this may provide the advantage that a risk of obtaining imperfections of the resulting spectacle lens due to a misalignment of processing steps with regard to the ring-shaped diffraction structure can be reduced or avoided.

The optical mark may be applied in a non-permanent manner according to the disclosure. This may allow removing the optical mark during or after the manufacturing process. This may reduce a risk of residues of the optical mark disturbing the use of the final spectacle lens and/or of interfering with possible other marks applied for edging and adjusting the spectacle lens with regard to the spectacle frame.

Applying the optical mark may comprise at least one of the following steps: ink-jet printing the optical mark to a front surface or a back surface of the spectacle lens blank, and ink stamping the optical mark to the front surface or the back surface of the spectacle lens blank. This may provide the advantage that the applied marks may be removable with little effort. Moreover, this may provide the advantage that individual adjustments for positioning the optical mark at the spectacle lens may be realized by a respective positioning of the ink stamp or the ink-jet printer with regard to the spectacle lens blank.

Various techniques for applying optical marks to spectacle lens blanks are known in prior art, as indicated in the introduction.

The optical mark may be applied to at least one of a front surface and a back surface of the spectacle lens blank.

Furthermore, a method for manufacturing a spectacle lens or a semi-finished spectacle lens according to predefined prescription data is provided, characterized in that it includes blocking a spectacle lens blank according to the disclosure and mechanically altering a front surface or a back surface of the blocked spectacle lens blank according to the predefined prescription data.

The method may comprise mechanically altering the front surface of the blocked spectacle lens if the spectacle lens to be manufactured is a front side manufactured lens. Alternatively or additionally, the method may comprise mechanically altering the back surface of the blocked spectacle lens if the spectacle lens to be manufactured is a spectacle lens having a ring-shaped diffraction structure.

A spectacle lens or a semi-finished spectacle lens blank may be obtained by a method according to the disclosure.

The disclosure provided for the method for blocking a spectacle lens blank shall be regarded also as disclosed for the method for manufacturing a spectacle lens or a semi-finished spectacle lens.

It is understood by a person skilled in the art that the above-described features and the features in the following description and figures are not only disclosed in the explicitly disclosed embodiments and combinations, but that also other technically feasible combinations as well as the isolated features are comprised by the disclosure of the invention. In the following, several embodiments of the invention and specific examples of the invention are described with reference to the figures for illustrating the invention without limiting the invention to the described embodiments.

Further optional embodiments will be illustrated in the following with reference to the drawings.

The figures show:
- Fig. 1A: an optical mark according to an optional embodiment;
- Fig. 1B: a spectacle lens blank having an optical mark applied to it;
- Fig. 1C: in an exemplary manner a blocking piece with a spectacle lens blank blocked to it;
- Fig. 1D: a spectacle lens blank having a ring-shaped diffraction structure and an optical mark according to an optional embodiment;
- Fig. 2: a method for blocking a spectacle lens blank;
- Fig. 3: a method for manufacturing a spectacle lens,
- Fig. 4A: a spectacle lens according to an optional embodiment obtained by a method according to the disclosure, and
- Fig. 4B: a spectacle lens according to an optional embodiment obtained by a method according to the disclosure.

In the drawings the same reference signs are used for corresponding or similar features in different drawings.

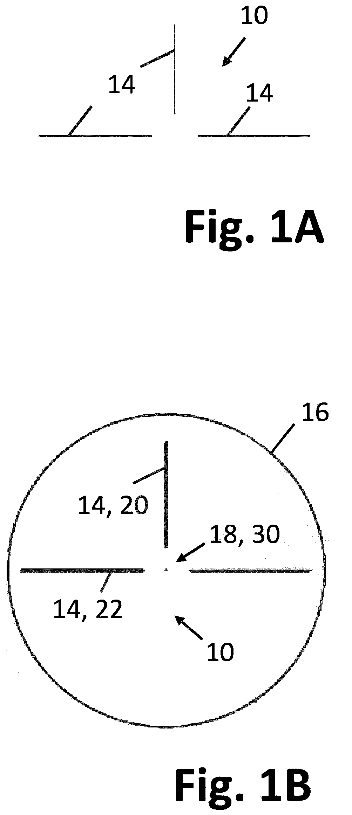

Figure 1A schematically depicts an optical mark 10 according to an optional embodiment. The optical mark 10 comprises an arrangement of multiple straight lines 14, wherein a relative arrangement may indicate the location of a point of interest at the spectacle lens blank and the straight lines may indicate some directions of the spectacle lens blank. The optical mark 10 may be applied to a spectacle lens blank by ink-jet printing and/or ink stamping.

Figure 1B schematically depicts a spectacle lens blank 16 having an optical mark 10 applied thereto. The optical mark 10 comprises the arrangement of straight lines 14, as shown in Figure 1A, and a spot 12. The spot 12 may indicate the location of a center point of the spectacle lens blank 16. The center point 18 marks the location of the geometrical center 30 of the spectacle lens blank 16. The straight lines 14 may indicate a horizontal centerline 20 and a vertical centerline 22.

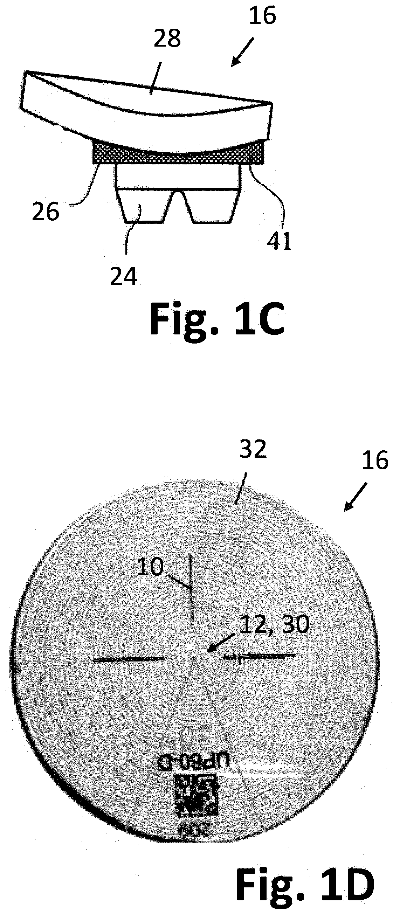

Figure 1C schematically illustrates a spectacle lens blank 16 blocked to a blocking piece 24 in a decentered manner. A central axis of the blocking piece 24 and a central axis of the spectacle lens blank 16 do not coincide. The decentration may be presented in an exaggerated manner for the sake of illustration. Figure 1C further indicates the front surface 26 and the back surface 28 of the spectacle lens blank.

Figure 1D depicts a spectacle lens blank 16 according to an optional embodiment having a ring-shaped diffraction structure 32. A marking according to the marking presented in Figure 1B is applied to the spectacle lens blank 16, wherein the spot 12 of the optical mark 10 indicates the geometrical center 30 of the ring-shaped diffraction structure 32. Other markings, such as a data matric code may be applied in a predefined area which may be identified based on the optical mark 10, such as exemplarily indicated by the angular segment spanning over 30° in the lower half of the spectacle lens blank 16.

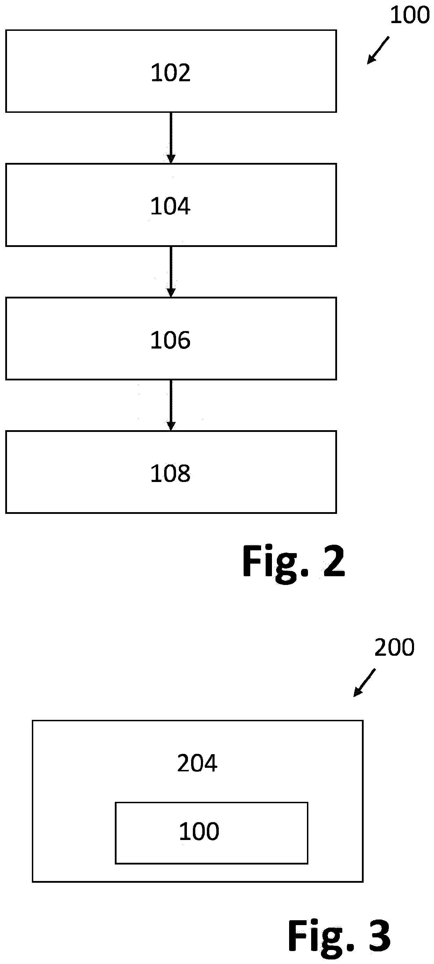

Figure 2 illustrates a method for blocking a spectacle lens blank 16 according to an optional embodiment. The method comprises identifying 102 at least a position of a center point 12 of the spectacle lens blank 16 and applying 104 an optical mark 10 to the spectacle lens blank 16 indicating at least the position of the center point 12 of the spectacle lens blank 16. The method further comprises arranging 106 the spectacle lens blank 16 in a decentered manner at the blocking piece 24, at least such that the position of the center point 12 indicated by the applied optical mark 10 is located at a predefined relative position with respect to the blocking piece 24. The method further comprises blocking 108 the spectacle lens blank 16 to the blocking piece 24 in the decentered arrangement.

The optical mark 10 may be applied in a decentered manner to the spectacle lens blank 16.The optical mark may have a predefined appearance.

Optionally, the optical mark comprises a spot 12 for indicating the center point of the spectacle lens blank 16 or one or more straight lines 14 for indicating at least one of a horizontal centerline and a vertical center line. In such cases, the spectacle lens blank 16 may be arranged at the blocking piece 24 in a manner that the at least one horizontal centerline and the vertical centerline are oriented in a predefined manner with respect to the blocking piece 24.

The center point 12 of the spectacle lens blank 16 may be the geometrical center 30 of the spectacle lens blank 16 or a geometrical center 30 of a ring-shaped diffraction structure 32 of the spectacle lens blank 16, with the optical mark 10 may further indicate at least one of a horizontal centerline and a vertical centerline of the ring-shaped diffraction structure 32 applied to the spectacle lens blank 16.

The optical mark 10 can be applied in a non-permanent manner and may be ink-jet printed or ink stamped to the front surface 26 and/or the back surface 28 of the spectacle lens blank 16. The optical mark 10 can be applied to at least one of a front surface and a back surface of the spectacle lens.

Figure 3 illustrates a method 200 for manufacturing a spectacle lens 34 or a semi-finished spectacle lens according to an optional embodiment. The method 200 comprises the step of blocking a spectacle lens 34 blank using a method 100 according to Figure 2. The method 200 further comprises mechanically altering 202 a front surface 26 or a back surface 28 of the blocked spectacle lens blank 16 according to predefined prescription data.

The spectacle lens 34 to be manufactured may be a front side manufactured lens and the method 200 may comprise mechanically altering 204 the front surface 26 of the blocked spectacle lens blank 16. Alternatively or additionally, the spectacle lens 34 to be manufactured is a spectacle lens 34 having a ring-shaped diffraction structure 32 and the method 200 comprises mechanically altering 204 the back surface 28 of the blocked spectacle lens blank 16.

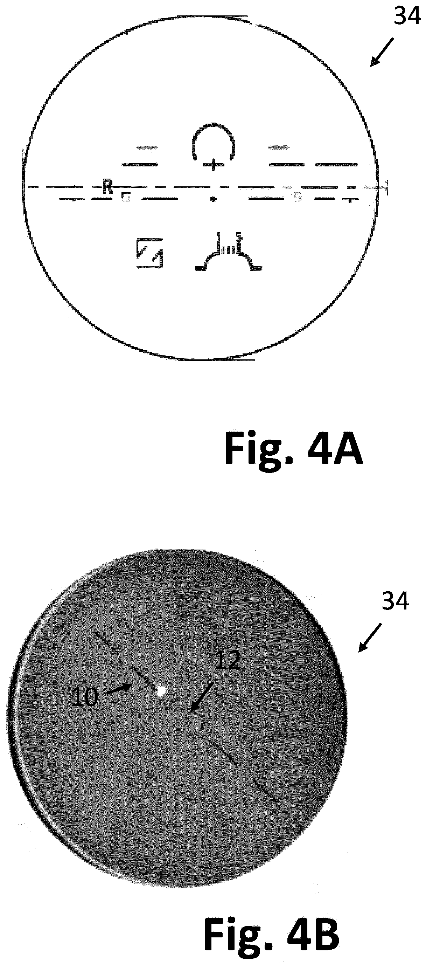

Figure 4A illustrates a spectacle lens 34 according to an optional embodiment. This spectacle lens 34 or semi-finished spectacle lens blank may be obtained by a method 200 according to Figure 3. The spectacle lens may be provided with further optical marks to assist an optician in his task to adjust the spectacle lens 34 to a spectacle frame. Such markings may be applied to the spectacle lens 34 after completing the processes of mechanically altering the front surface and/or the back surface of the spectacle lens blank 16 and after optionally coating the spectacle lens blank 16.

Figure 4B schematically illustrates a spectacle lens 34 having a ring-shaped diffractive structure 32, wherein a geometric center of the spectacle lens 34, as indicated by the cross hair, deviates from the geometric center of the ring-shaped diffractive structure, as indicated by the central spot 12 of the optical mark 10.

### List of reference signs

- 10: optical mark
- 12: spot
- 14: straight lines
- 16: spectacle lens blank
- 18: center point
- 20: horizontal centerline
- 22: vertical centerline
- 24: blocking piece
- 26: front surface
- 28: back surface
- 30: geometrical center
- 32: ring-shaped diffraction structure
- 34: spectacle lens
- 100: method
- 102-108: method steps
- 200: method
- 204: method step

## Claims

1. Method (100) for blocking a spectacle lens blank (16), the method (100) comprising:
- identifying (102) at least a position of a center point of the spectacle lens blank (16); and
- applying (104) an optical mark (10) to the spectacle lens blank (16) indicating at least the position of the center point (18) of the spectacle lens blank (16);
**characterized in that** the method (100) further comprises:
- arranging the spectacle lens blank (16) in a decentered manner at the blocking piece (24), such that at least the position of the center point (18) indicated by the applied optical mark (10) is located at a predefined relative position with respect to the blocking piece (24); and
- blocking (108) the spectacle lens blank (16) to the blocking piece (24) in the decentered arrangement.

2. Method (100) according to claim 1, wherein the optical mark (10) is applied in a decentered manner to the spectacle lens blank (16) .

3. Method (100) according to claim 1 or 2, wherein the optical mark (10) has a predefined appearance.

4. Method (100) according to any one of the preceding claims, wherein the optical mark (10) comprises a spot (12) for indicating the center point (18) of the spectacle lens blank (16) .

5. Method (100) according to any one of the preceding claims, wherein the optical mark (10) comprises one or more straight lines (14) for indicating at least one of a horizontal centerline (20) and a vertical centerline (22); and
wherein the spectacle lens blank (16) is arranged in the decentered manner at the blocking piece (24) such that the at least one of the horizontal centerline (20) and the vertical centerline (22) are oriented in a predefined manner with respect to the blocking piece (24).

6. Method (100) according to any one of the preceding claims, wherein the center point (18) of the spectacle lens blank (16) is a geometrical center (30) of the spectacle lens blank (16).

7. Method (100) according to claim 6, wherein the optical mark (10) comprises one or more straight lines (14) for indicating at least one of a horizontal centerline (20) and a vertical centerline (22) of the spectacle lens blank (16); and
wherein the spectacle lens blank (16) is arranged in the decentered manner at the blocking piece (24) such that the at least one of the horizontal centerline (20) and the vertical centerline (22) are oriented in a predefined manner with respect to the blocking piece (24).

8. Method (100) according to any one of claims 1 to 5, wherein the center point (18) of the spectacle lens blank (16) is a geometrical center (30) of a ring-shaped diffraction structure (32) of the spectacle lens blank (16).

9. Method (100) according to claim 8, wherein the optical mark (10) further indicates at least one of a horizontal centerline (20) and a vertical centerline (22) of the ring-shaped diffraction structure (32) applied to the spectacle lens blank (16).

10. Method (100) according to any one of the preceding claims, wherein the optical mark (10) is applied in a non-permanent manner.

11. Method (100) according to any one of the preceding claims, wherein applying (104) the optical mark (10) comprises at least one of the following steps:
- ink-jet printing the optical mark (10) to a front surface (26) or a back surface (28) of the spectacle lens blank (16); and
- ink stamping the optical mark (10) to the front surface (26) or the back surface (28) of the spectacle lens blank (16).

12. Method (100) according to any one of the preceding claims, wherein the optical mark (10) is applied to at least one of a front surface (26) of the spectacle lens (34) and a back surface (28) of the spectacle lens blank (16).

13. Method (200) for manufacturing a spectacle lens (34) or a semi-finished spectacle lens (34) according to predefined prescription data, the method (100, 200) comprising:
- blocking (108) a spectacle lens blank (16) using a method (100) according to any one of the preceding claims; and
- mechanically altering (204) a front surface (26) or a back surface (28) of the blocked spectacle lens blank (16) according to the predefined prescription data.

14. Method (200) according to claim 13, wherein:
- the spectacle lens (34) to be manufactured is a front side manufactured lens and the method (200) comprises mechanically altering (204) the front surface (26) of the blocked spectacle lens blank (16); or
- the spectacle lens (34) to be manufactured is a spectacle lens (34) having a ring-shaped diffraction structure (32) and the method (200) comprises mechanically altering (204) the back surface (28) of the blocked spectacle lens blank (16) .

15. Spectacle lens (34) or semi-finished spectacle lens blank obtained by a method (200) according to claim 14.
